# EUROPEAN PATENT APPLICATION

(11) **EP 2 172 925 A1**
(43) Date of publication of application: **07.04.2010**
(21) Application number: 08791817.3
(22) Date of filing: 29.07.2008
(51) Int. Cl.: G09G 5/02, G02F 1/13, G09F 9/00, G09G 3/20, G09G 3/30, G09G 3/34, H01L 51/50

(54) **IMAGE DISPLAY DEVICE**

(30) Priority: 03.08.2007 JP 2007203343
(71) Applicant: Sony Corporation, Tokyo 108-0075 (JP)
(72) Inventor: YAMAMOTO, Takuro, Tokyo 108-0075 (JP); YAMASHITA, Shiko, Tokyo 108-0075 (JP); YASUDA, Akio, Tokyo 108-0075 (JP); SHIONO, Mayumi, Tokyo 108-0075 (JP); KISHII, Noriyuki, Tokyo 108-0075 (JP); NAKAGAWA, Kazuhiro, Tokyo 108-0075 (JP); HAYAKAWA, Tomohiro, Tokyo 108-0075 (JP)
(74) Representative: Tyson, Robin Edward
(86) International application number: PCT/JP2008/063582
(87) International publication number: WO 2009/020013

(57) **Abstract**

An object is to provide an image display device which exercises a function of adjusting a biological clock without changing a visibility of an image. An image display device (A) for displaying an image by radiating a light from a light source (1) to a display portion (2) includes: the light source (1) having a radiation emitter for emitting a light having a wavelength band of 445 to 480 nm; and control means (3) for controlling an intensity of the light having the wavelength band; in which a display portion includes an area (21) on which a predetermined image is displayed; and an area (22) on which an image for which the intensity of the light having the wavelength band is controlled by the control means (3) separately, independently of each other.

## Description

### Technical Field

The present invention relates to an image display device. More particularly, the invention relates to an image display device including a function of adjusting a biological rhythm.

### Background Art

A biological body has a clock mechanism (biological clock) inside of the body, and controls periodical phenomena about biological functions. Sleeping and awakening, changes in body temperature and blood pressure, and the like are known as the typical periodical phenomena. They are especially controlled by a biological rhythm called a circadian rhythm (refer to Emi Koyama: "Time Biological Understanding about Ecological System Features through Modeling," Measurement and Control Vol. 41, No. 10, October, 2002). Although the circadian rhythm essentially exhibits a period of 24 to 25 hours, the circadian rhythm is mainly synchronized with the period of the 24 hours as the one-day period in accordance with the photoenvironment.

In particular, a hormone called a melatonin is concerned in the control for the rhythm of the sleeping and awakening, and a secretion quantity of melatonin changes in accordance with the change in photoenvironment, thereby controlling the rhythm. That is to say, the secretion quantity of melatonin increases under a dark environment, so that a sedative effect of the melatonin is exhibited. Conversely, the secretion quantity of melatonin decreases under a light environment, thereby providing the awakening effect. It is thought that the melatonin widely functions for the adjustment of the circadian rhythm in addition to the rhythm of the sleeping and awakening.

In the modern society, not only time spent indoors increases, but also the night mode of the life progresses due to the development of the illumination, so that the light-dark change does not appear in the day-and-night photoenvironment so much. In addition, the traffic by air becomes active, and thus the opportunity also increases in which a person is exposed to the photovironment in which day and night are inversed due to a time difference. For this reason, the synchronization of the biological rhythm owing to the photoenvironment is not well performed, and thus a health problem due to the shift of the biological rhythm such as a sleep disturbance or a jet lag syndrome is caused.

Thus, in recent years, the technique aiming at adjusting the biological rhythm by artificially controlling the photoenvironment has been developed.

For example, Japanese Patent Laid-Open No. Hei 9-306672 discloses an illumination system for changing an indoor-illumination so as to correspond to transition of a change in light quantity of sun-light from sunrise to sunset.

In addition, Japanese Patent Laid-Open No. 2002-350790, and JP-T-2006-525039 each disclose glasses in which a light emitting member for emitting a light having an illuminance and a wavelength urging a wearer for an awakening property and a light therapy effect to radiate the light thus emitted to the wearer is disposed in a frame portion of the glasses.

Japanese Patent Laid-Open No. 2006-231057 discloses a display device which includes input means for arbitrarily setting time at which a user is awakened (or sedated) and which carries out control in such a way that a light having a specific wavelength band (445 to 480 nm) is strengthened (or weakened) at the time at which the user is awakened (or sedated). It should be noted that it is made clear that with respect to the light having this wavelength band, the effect for suppressing the melatonin secretion is especially remarkable (refer to "Action Spectrum for Melatonin Regulation in Humans: Evidence for a Novel Circadian Photorecepter," The Journal of Neuroscience, 2001 Aug 15; 21(16): 6405-12).

In the illumination system disclosed in Japanese Patent Laid-Open No. Hei 9-306672, the equipment becomes large because the biological rhythm is adjusted by changing the indoor-illumination.

In addition, in the glasses disclosed in Japanese Patent Laid-Open No. 2002-350790, and JP-T-2006-525039, although the effect for adjusting the biological rhythm can be obtained anywhere, there was a trouble that the wearer needs to wear the glasses each time.

The display device disclosed in Japanese Patent Laid-Open No. 2006-231057 can be adopted as a display for a personal computer, a television set, or a mobile apparatus. However, since the display device concerned is configured in such a way that an intensity of a blue light (a wavelength band of 445 to 480 nm) for suppressing the secretion of the melatonin is changed, there was the possibility that a fluctuation in white balance of a picture, or a change in shade and color occurs, and thus it is difficult to see an image (refer to paragraphs 0060, 0069, etc. of the Patent Document concerned).

In the light of the foregoing, it is an principal object of the present invention to provide an image display device which exercises a function of adjusting a biological clock without changing a visibility of an image.

### Disclosure of Invention

In order to solve the problem described above, according to the present invention, there is provided an image display device for displaying an image by radiating a light from a light source to a display portion, including: the light source having a radiation emitter for emitting a light having a wavelength band of 445 to 480 nm; and control means for controlling an intensity of the light having the wavelength band; in which a display portion includes an area on which a predetermined image is displayed; and an area on which an image for which the intensity of the light having the wavelength band is controlled by the control means separately, independently of each other.

The image display device includes: discriminating means for discriminating a work area and a non-work area for a user in the display portion from each other; in which the control means causes an image for which the controlled intensity of the light having the wavelength band is controlled to be displayed in the non-work area in accordance with an output from the discriminating means.

In addition, the image display device may includes: input means for setting an arbitrary control pattern in accordance with which the intensity of the light having the wavelength band is controlled; and storage means for holding the control pattern thus inputted. As a result, the control means can control the intensity of the light having the wavelength band in accordance with the control pattern set by the input means and outputted from the storage means.

Moreover, the image display device may include a light receiving portion for receiving a light from an environment. As a result, the control means can control the intensity of the light having the wavelength band in accordance with an output from the light receiving portion.

In the present invention, "the image" means image information which widely contains therein an image such as a still image, a moving image, a character or a diagram which is displayed on the display, and which can be normally displayed on the display of the personal computer, the television set, the mobile phone or the like.

In addition, "the work area" means an area in which the user causes the image such as the still image, the moving image, the character or the diagram to be displayed on the display portion, and carries out "the work" such as the viewing of the still image and the moving image, and the editing of the character and the diagram in the display portion. On the other hand, "the non-work area" means "an area" in which the user does not carry out these works in the display portion. An area which is located outside a window of an application designed for creating documents in the display, and in which a desktop background image is displayed in a phase of creation of the documents in a personal computer is given as a concrete example of "the non-work area." In addition, in viewing the picture on the television set in a two-screen split mode, when an image is displayed only on one split screen, the other split screen becomes the non-work area. It can be said that "the work area" and "the non-work area" are "an area watched" and "an area not watched" in the user of the display, respectively.

"The control pattern" means information which is stored in such a way that the intensity of the light having the specific wavelength band descried above is made to correspond to the hour.

According to the present invention, there is provided the image display device which exercises the function of adjusting the biological clock without changing the visibility of the image.

### Brief Description of Drawings

[FIG. 1]

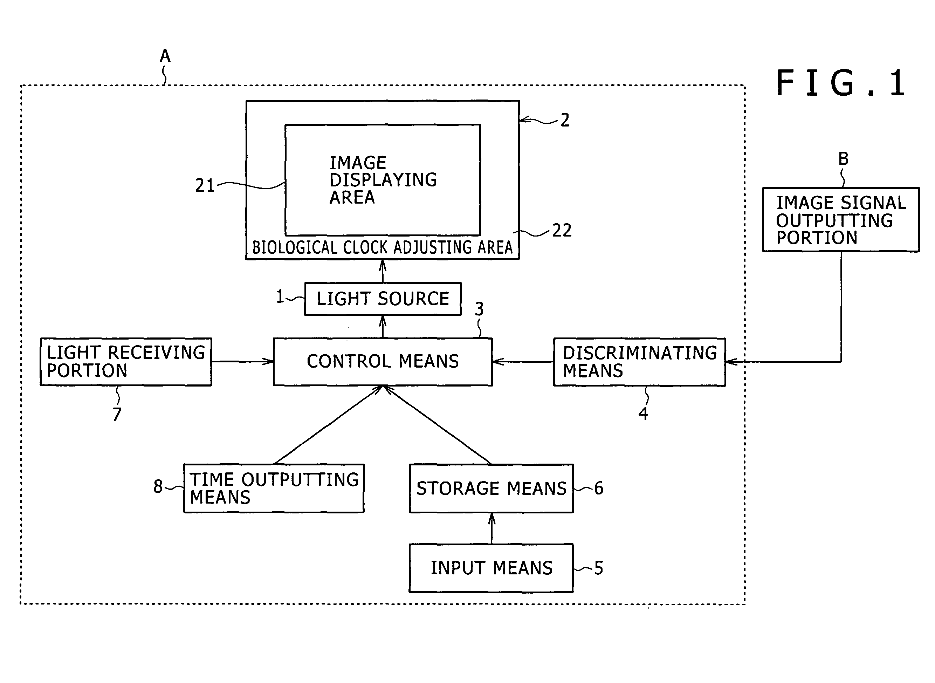

   FIG. 1 is a diagram explaining a configuration of an image display device according to the present invention.
[FIG. 2]

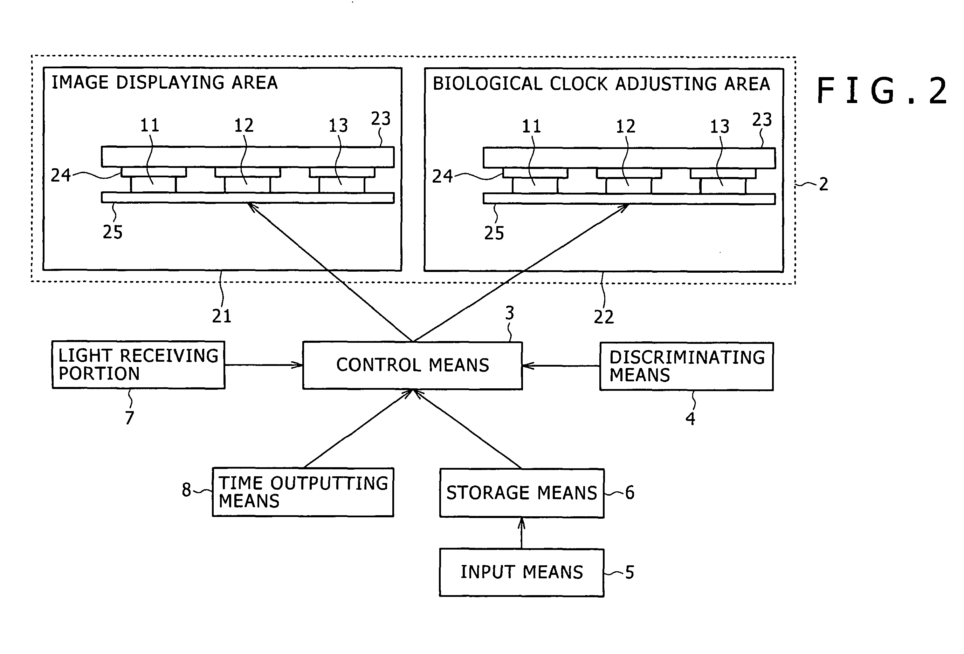

   FIG. 2 is a diagram explaining a method of controlling a light source 1 by control means 3.
[FIG. 3]

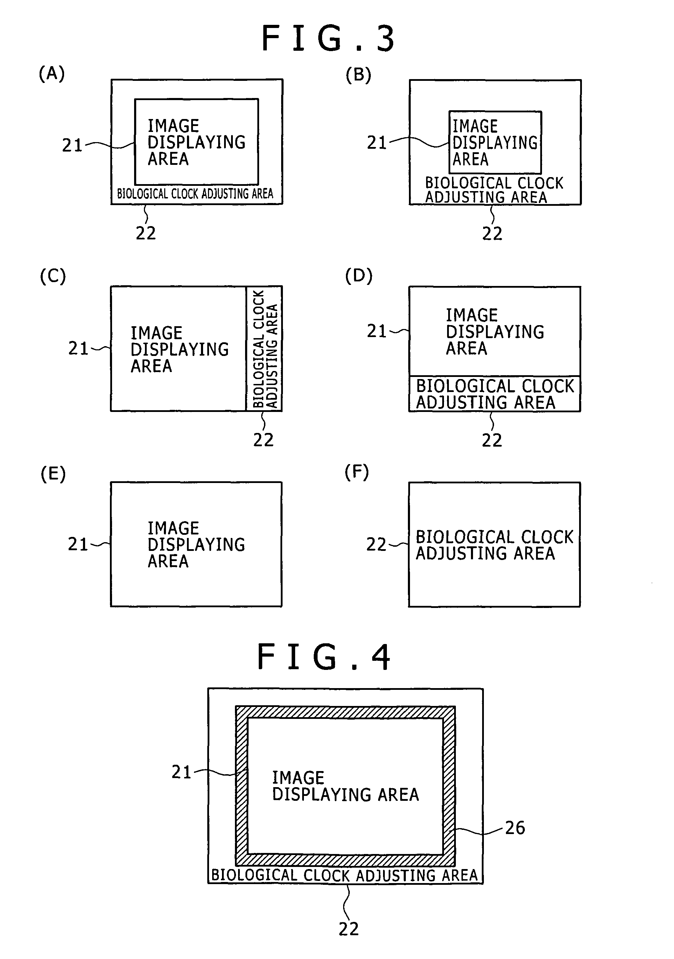

   FIG. 3 is a diagram showing examples of dispositions of an image displaying area 21 and a biological clock adjusting area 22 in a display portion 2.
[FIG. 4]
   FIG. 4 is a diagram showing another example of the disposition of the image displaying area 21 and the biological clock adjusting area 22 in the display portion 2.
[FIG. 5]

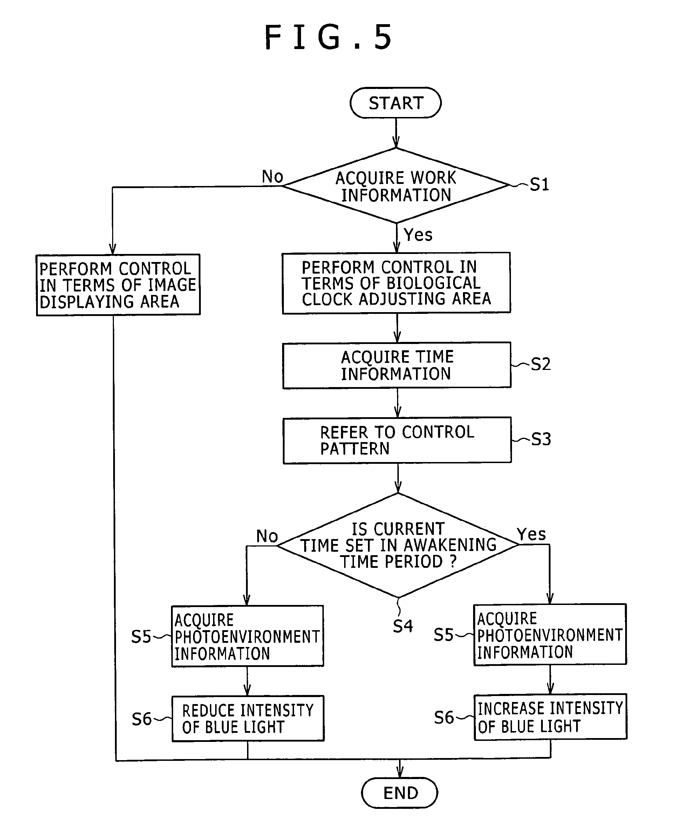

   FIG. 5 is a chart explaining a procedure for controlling an intensity of a blue light by the control means 3.
[FIG. 6]

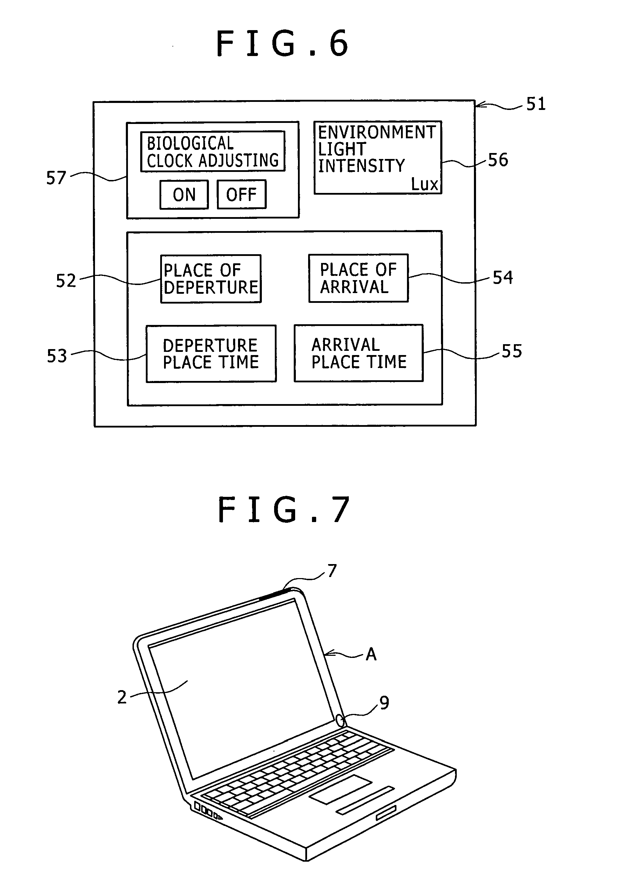

   FIG. 6 is a diagram showing an example of a control pattern setting screen in input means 5.
[FIG. 7]
   FIG. 7 is a view showing a notebook-size personal computer in which an image display device A is adopted as a display thereof.

### Best Mode for Carrying Out the Invention

Hereinafter, a suitable mode for carrying out the present invention will be described with reference to the drawings. It should be noted that an embodiment which will be described below shows an example of a typical embodiment of the present invention, and thus the scope of the present invention is by no means intended to be construed in a limiting sense.

A configuration of an image display device according to the present invention will now be descried with reference to FIG. 1.

As shown in FIG. 1, the image display device A according to the present invention includes a light source 1, and a display portion 2 on which an image is displayed by radiating thereto a light from light source 1.

The light source 1 includes a radiation emitter for emitting a light having a wavelength band of 445 to 480 nm (hereinafter referred to as "a blue light"). The light having this wavelength band has a function of remarkably suppressing melatonin secretion (refer to "Action Spectrum for Melatonin Regulation in Humans: Evidence for a Novel Circadian Photoreceptor," The Journal of Neuroscience, 2001 Aug 15; 21(16): 6405-12).

The display portion 2 includes an area 21 on which a predetermined image is displayed (hereinafter referred to as "an image displaying area 21"), and an area 22 on which an image for which the intensity of the blue light emitted from the light source 1 is controlled is displayed (hereinafter referred to as "a biological clock adjusting area 22") separately, independently of each other. The predetermined image desired by a user is displayed on the image displaying area 21. Also, on the biological clock adjusting area 22, the image for which the intensity of the blue light is controlled is displayed to control a secretion quantity of melatonin of the user, thereby adjusting the biological clock.

More specifically, when the intensity of the blue light of the image on the biological clock adjusting area 22 is increased, the secretion quantity of melatonin of the user is suppressed, thereby providing an effect for awakening the user. On the other hand, when the intensity of the blue light is reduced, the secretion quantity of melatonin of the user is not suppressed, thereby making it possible to sedate the user.

The image which is displayed on the biological clock adjusting area 22 may be arbitrary. For example, the image concerned can be made either an image having a geometric pattern giving a beautiful impression, or a desktop background image displayed especially in such a case that the image display device A is adopted as a display of a personal computer.

The image display device A further includes control means 3 for controlling an intensity of a light emitted from the light source 1, and discriminating means 4 for discriminating the work area and the non-work area for the user in the display portion 2 from each other, thereby outputting work information to the control means 3.

The discriminating means 4 discriminates the work area and the non-work area for the user in the display portion 2 from each other based on an image signal outputted from an image signal outputting portion B, and outputs a discrimination result as the work information to the control means 3. The image signal outputting portion B, for example, is a video board in the case of the personal computer. In the personal computer, information which the user inputs by using an input unit such as a keyboard or a mouse is processed in a CPU, and is then converted into an image signal, in the video board, which is in turn outputted to the display. The discriminating means 4 discriminates the work area and the non-work area for the user in the display portion 2 from each other based on the image signal outputted from the video board.

The control means 3 receives the output of the work information from the discriminating means 4, and allocates the work area and the non-work area as the image display area 21 described above and the biological clock adjusting area 22 described above, respectively, and causes the predetermined image, and the image for which the intensity of the blue light is adjusted on the image displaying area 21 and the biological clock adjusting area 22, respectively.

The image display device A further includes input means 5 for setting an arbitrary control pattern in accordance with which the intensity of the blue light is controlled, storage means 6 for holding therein the control pattern inputted thereto, and a light receiving portion 7 for receiving a light from an environment, and outputting photoenvironment information to the control means 3.

Here, "the control pattern" means information which is stored in such a way that the intensity of the blue light is made to correspond to the hour. With regard to the control pattern, there are a plurality of control patterns such as a pattern for increasing the intensity of the blue light in a time zone in the early morning when the user is normally in a sleep-wake state, or in a time zone after lunch when the user tends to get sleepy, or a pattern for increasing the intensity of the blue light at night when a night worker is supposed.

The input means 5 is provided to arbitrarily set the control pattern for the intensity of the blue light for the purpose of obtaining a desired biological clock adjusting effect in the user. In addition, the input means 5 outputs any of the plurality of control patterns thus set to the storage means 6 in accordance with the desire of the user. The control pattern thus outputted is held in the storage means 6.

In addition to the control pattern which is arbitrarily set by the user, the standard control pattern can also be held in the storage means 6 in advance. In the input means 5, the user can select any of these control patterns held in the storage means 6 in advance, thereby outputting the control pattern thus selected to the control means 3.

The light receiving portion 7 receives the light, from the environment, such as the illumination light or the sunlight, and outputs the intensity of the light thus received as the photoenvironment information to the control means 3.

The control means 3 displays the image for which the intensity of the blue light is controlled in accordance with the control pattern outputted from the storage means 6 through the selection made by the user on the biological clock adjusting area 22. In this connection, the control means 3 receives an output on time information indicating current time from time outputting means designated by reference numeral 8 in the figure, and carries out the control pattern by making reference to the current time. Moreover, the control means 3 receives an output of the photoenvironment information from the light receiving portion 7, and carries out the control for the intensity of the blue light in accordance with the intensity of the environment light.

Next, a method of controlling the light source 1 by the control means 3 will be more concretely described with reference to FIG. 2.

A member can be adopted as the display portion 2 of the image display device A without being especially limited as long as it can display an image by radiating thereto the light from the light source 1 as typified by an organic electro-luminescence (EL) panel, a liquid crystal panel or the like. Hereinafter, a description will be given by taking the case where the organic EL panel is adopted as the image display portion 2 as an example.

The image display device A includes the control means 3 for controlling currents which are given to pixels of the display portion (organic EL panel) 2, respectively.

The display portion (organic EL panel) 2 is composed of a large number of cells. Each of the cells, as shown in FIG. 2, is composed of a glass substrate 23, an anode 24, an organic layer (radiation emitter) 11 for emitting a red light, an organic layer (radiation emitter) 12 for emitting a green light, an organic layer (radiation emitter) 13 for emitting a blue light, and a cathode 25. The organic layer 11, the organic layer 12 and the organic layer 13 compose the light source 1.

In the figure, cells which are located in the image display area 21 and the biological clock adjusting area 22 of the display portion 2, respectively, are shown.

With the structure described above, in the image display device A, each of the cells in the display portion 2 is structured as one pixel, and the lights emitted from the organic layers 11, 12 and 13, respectively, are mixed with one another, thereby carrying out color display.

In this connection, since the blue light having a wavelength band of 445 to 480 nm is generated when the organic layer 13 is made to emit the light, the secretion quantity of melatonin of the user who uses the image display device A is suppressed, thereby providing the effect for awaking the user. Thus, when the effect for awakening the user is desired to be obtained, the control means 3 carries out the control in such a way that either the emission intensity is increased by increasing the current given to the organic layer 13, or the emission intensity corresponding to the current given to the organic layer 13 is made to relatively large as compared with the case of each of the organic layers 11 and 12. On the other hand, when the effect for sedating the user is desired to be obtained, the control means 3 carries out the control in such a way that either the emission intensity is reduced by decreasing the current given to the organic layer 13, or the emission intensity corresponding to the current given to the organic layer 13 is made to be relatively small as compared with the case of each of the organic layers 11 and 12.

In general, however, when the emission intensity of the organic layer 13 is changed in the manner as described above, it becomes a problem that the white balance of the display fluctuates. In addition, when the emission intensity of the organic layer 13 is abruptly changed, it is also feared that the shade and color of the display abruptly change to give the user a feeling of discomfort.

For this reason, in the image display device A according to the present invention, the image display area 21 and the biological clock adjusting area 22 are provided in the display portion 2 separately, independently of each other. Also, the predetermined image which the user desires to display is displayed on the image displaying area 21, whereas the image for which the emission intensity of the organic layer 13 is controlled is displayed on the biological clock adjusting area 22. Thus, the image display device A is configured in such a manner.

That is to say, the control means 3 receives the output on the work information from the discriminating means 4, allocates the worker area and the non-work area as the image displaying area 21 and the biological clock adjusting area 22, respectively, and carries out the control for the emission intensity of the organic layer 13 only in the non-work area as "the area not watched" in the user. As a result, the changes in white balance, and shade and color of the work area as "the area watched" by the user are not caused in the image display device A.

It should be noted that the display portion (organic EL panel) 2 may also be one structured in such a way that the organic layers used as the radiation emitters emit monochromatic lights such as a blue light, and colors expressed by the respective monochromatic lights are color-converted by respective phosphors. Or, the display portion 2 may also be one utilizing a color filter system in which an organic layer as a radiation emitter emits a white light, and a color expressed by the white color is converted into three colors of red, green and blue by a filter.

In addition, the display portion (organic EL panel) 2 may also adopt a structure in which inorganic ELs are used as the radiation emitters instead of using the organic layers 11, 12 and 13, respectively. Moreover, an LED display using LEDs (light emitting diodes) as the radiation emitters for emitting the lights having the respective colors may also be substituted for the organic EL panel 2.

With respect to the number of organic layers, the number of organic layers each having a weak emission intensity may also be increased so as to correspond to a difference between each two maximum emission intensities in the organic layers having the respective colors. Moreover, two organic layers 2 having the same color, or a plurality of organic layers 2 may also be arranged. With respect to the dispositions as well of the organic layers, all the organic layers, as shown in FIG. 2, need not to be disposed in a line. Thus, the organic layers may be disposed so as to alternately shift their positions, or the organic layers may be classified with their colors and the organic layers corresponding to the same color and obtained through the classification may be disposed in a line. In addition, as shown in FIG. 2, the organic layer 11, the organic layer 12, and the organic layer 13 need not to be disposed in this order, and thus the order of the dispositions of the organic layers can be arbitrarily selected.

FIG. 3 is a diagram showing examples of dispositions of the image display area 21 and the biological clock adjusting area 22 in the display portion 2.

The positions of the image display area 21 and the biological clock adjusting area 22 in the display portion 2 are allocated by the control means 3 based on the work information outputted from the discriminating means 4. Therefore, as shown in the figure, the dispositions of the image display area 21 and the biological clock adjusting area 22 can be arbitrarily set in accordance with the desire of the user.

For example, (A) of FIG. 3 shows a state in which the image displaying area 21 is disposed at the center of the display portion 2, and the biological clock adjusting area 22 is disposed in the periphery of the image displaying area 21. In this case, as shown in (B) of FIG. 3, a size of the image displaying area 21 can be arbitrarily changed.

In addition, (C) of FIG. 3 shows a state in which the image displaying area 21 is disposed on the left-hand side of the display portion 2, and the biological clock adjusting area 22 is disposed on the right-hand side of the display portion 2, and (D) of FIG. 3 shows a state in which the image displaying area 21 is disposed on the upper side of the display portion 2, and the biological clock adjusting area 22 is disposed on the lower side of the display portion 2.

For example, in the case of the personal computer, the control means 3 allocates such dispositions of the image displaying area 21 and the biological clock adjusting area 22 by arbitrarily setting a size and a position of an application window in the display portion 2 by using an input unit such as a keyboard or a mouse by the user through the image signal outputting portion B (the video board, refer to FIG. 1) and the discriminating means 4.

When no biological clock adjustment is carried out by the image display device A, as shown in (E) of FIG 3, the entire area of the display portion 2 can also be used as the image display area 21. Conversely, when no work such as the viewing of the still image and the moving image, or the editing of the character and the diagram is carried out, as shown in (F) of FIG. 3, the entire area of the display portion 2 can also be used as the biological clock adjusting area 22.

Moreover, as shown in FIG. 4, a boundary area 26 (indicated in the figure by slant lines) may be provided between the image displaying area 21 and the biological clock adjusting area 22.

When the allocation of the image displaying area 21 and the biological clock adjusting area 22 is carried out in the control means 3 based on the work information outputted from the discriminating means 4, the boundary area 26 is allocated to a boundary portion between the image displaying area 21 and the biological clock adjusting area 22 together.

Since in the image display device A, the control for the emission intensity of the organic layer 13 is carried out only in the image display area 21 as the work area for the user, the user is given no feeling of discomfort by the changes in white balance and shade and color following the change in emission intensity of the organic layer 13. However, when the image displaying area 21 and the biological clock adjusting area 22 are provided adjacent to each other, there is the possibility that while the user visually recognizes the periphery of the image displaying area 21, he/she worries about the changes in white balance, and shade and color of the biological clock adjusting area 22. In addition, there is also conceivable the possibility that the blue light of the biological clock adjusting area 22 is thrown in the image displaying area 21. The boundary area 26 is provided in order to exclude these possibilities.

A width of the boundary area 26 can be suitably set, and a suitable width of the boundary area 26 can be selected depending on the size of the display portion 2. In addition, it is also possible to adopt such a structure that the user can set a desired width of the boundary area 26.

Whether or not the biological clock adjustment by the control for the intensity of the blue light is carried out in the biological clock adjusting area 22 disposed in the manner described above can be selected by the user. Thus, the control for the intensity of the blue light needs not to be always carried out in the biological clock adjusting area 22. Therefore, it is desirable that the image display device A is provided with switching means which can select whether or not the biological clock adjustment in the biological clock adjusting area 22 is carried out.

Next, a procedure for controlling the intensity of the blue light by the control means 3 will be described with reference to FIG. 5.

Firstly, in Step 1 (hereinafter abbreviated to "S1"), the control means 3 acquires the work information from the discriminating means 4, and carries out the allocation of the image displaying area 21 and the biological clock adjusting area 22. That is to say, with respect to the image displaying area 21 which is discriminated as the work area by the discriminating means 4, the procedure is terminated without carrying out the control for the blue light. As a result, a predetermined image based on the image signal from the image signal outputting portion B is displayed in the image displaying area 21.

On the other hand, with respect to the area which is discriminated as the non-work area by the discriminating means 4, an image for which the intensity of the blue light is controlled is displayed on that area as the biological clock adjusting area 22 in accordance with the procedure in and after S2.

Firstly, in S2, the control means 3 acquires the time information exhibiting the current time from the time outputting means 8. Also, in S3, the control means 3 holds the time information in the storage means 6, and makes reference to the control pattern selected by the user. Here, the procedure of S2 and S3 may be carried out in random order, and thus a constitution may be adopted such that after reference is firstly made to the control pattern, the time information is acquired.

As has been described, an arbitrary control pattern for obtaining the desired biological clock adjusting effect in the user is held in the storage means 6. The arbitrary control pattern may be one which is held in the storage means 6 in advance in addition to one which is arbitrarily inputted by the input means 5.

"TABLE 1" is a table showing an example of the control pattern. A control pattern P₁ shown in TABLE 1 is a control pattern supposing a user who has a biological rhythm that awakening time is 8:00, and bedtime is 24:00.

**[TABLE 1]**

| | |
|---|---|
| 6:00 - 8:00 | sedation time period |
| 8:00 - 10:00 | awakening time period |
| 10:00 - 12:00 | awakening time period |
| 12:00 - 14:00 | awakening time period |
| 14:00 - 16:00 | awakening time period |
| 16:00 - 18:00 | awakening time period |
| 18:00 - 20:00 | awakening time period |
| 20:00 - 22:00 | awakening time period |
| 22:00 - 0:00 | sedation time period |
| 0:00 - 2:00 | sedation time period |
| 2:00 - 4:00 | sedation time period |
| 4:00 - 6:00 | sedation time period |

In TABLE 1, "awakening time period" means a time zone for which the user desires to obtain the awakening effect, and "sedation time period" means a time zone for which the user desires to obtain the sedating effect. In the awakening time period, the secretion quantity of melatonin is suppressed by increasing the intensity of the blue light. In the sedation time period, the secretion quantity of melatonin is increased by reducing the intensity of the blue light.

In S4, with respect to the time information obtained from the time outputting means 8, the control means 3 refers to the control pattern P₁, and judges whether the current time is set in the awakening time period ("Yes"), or in the sedation time period ("No").

Specifically, when the time information obtained from the time outputting means 8 exhibits 7:00 as the sleeping time period of the user, by making reference to the control pattern P₁, the control means 3 judges that the current time is set in the sedation time period ("No"). On the other hand, when the time information obtained from the time outputting means 8 exhibits 9:00 as the awakening time period of the user, the control means 3 judges that the current time is set in the awakening time period ("Yes").

After that, the control means 3 acquires the photoenvironment information representing the intensity of the light from the environment from the light receiving portion 7, and carries out the control for the intensity of the blue light in accordance with the intensity of the environment light (S6).

When in the example described above, the time information acquired from the time outputting means 8 exhibits 9:00 after the awakening time (when it is judged in S4 that the current time is set in the awakening time period ("Yes"), the control means 3 suppresses the secretion quantity of melatonin by increasing the intensity of the blue light. As a result, the awakening effect is brought to the user.

By the way, when the intensity of the environment light is small (when the user stays under the dark environment), the effect can be obtained by only slightly increasing the intensity of the blue light. When the intensity of the environment light is large (when the user stays under the light environment), the intensity of the blue light is controlled so as to be larger so that the sufficient quantity of blue light is sensed by the eyes of the user. 100 lux, for example, can be set as the reference for small and large of the intensity of the environment light. The reason for this is because it is known that the circadian rhythm is synchronized with the photoenvironment of 100 lux or more (refer to Proc. Natl. Acad. Sci. USA.; 2007 May 22; 104(21): 9081-6. Epub 2007 May 14).

On the other hand, when in the example of "TABLE 1" described above, the time information acquired from the time outputting means 8 exhibits 23:00 before the bedtime (when it is judged in S4 that the current time is set in the awakening time period ("No"), the control means 3 promotes the secretion of the melatonin by reducing the intensity of the blue light. As a result, the sedating effect is brought to the user, thereby urging the user to go to bed.

Next, a description will be given with respect to examples of a structure of the input means 5, and a settable control pattern. The input means 5 is provided to arbitrarily set the control pattern for the intensity of the blue light in the user. Although the structure of the input means 5 is especially by no means limited, for example, the control pattern is set by using the structure as will be described below.

FIG. 6 is an example of a control pattern setting screen in the input means 5. In the figure, the structure displayed on the image displaying area 21 of the display portion 2 is suitable for the control pattern setting screen designated by reference numeral 51. However, a dedicated display screen can also be provided in a portion other than the display portion 2 of the image display device A.

For the control pattern setting screen 51, there is supposed the case where when the time zone of day and night changes due to a time difference between a place of departure and a place of arrival in the case where the movement is carried out in a plane, the adjustment of the biological rhythm is carried out by the image display device A. For example, there is supposed the case where the picture display device A is adopted as a display mounted to each of seats within an airplane, or the case where the picture display device A is adopted as a screen of a personal computer used in an airplane.

In the figure, reference numeral 52 designates a departure place inputting portion, and when a place of departure is set, time in the place of departure is displayed on a departure place time display portion 53. In addition, reference numeral 54 designates an arrival place inputting portion, and when a place of arrival is set, time in the place of arrival is displayed on an arrival place time displaying portion 55. By setting the place of departure, and the place of arrival, the input means 5 calculates the time difference, creates an optimal control pattern, and inputs the optimal control pattern to the storage means 6.

For example, in the control pattern P₁ supposing the user who has such a biological rhythm that the awakening time described above is 8:00, and the bedtime described above is 24:00, the departure place time is converted into the arrival place time, and either the awakening time period or the sedation time period set every time zone is changed so that the user is readily adapted to the arrival place time, thereby creating a control pattern P₂.

Also, when the picture display device A is adopted as the display mounted to each of the seats within the airplane, or when the picture display device A is adopted as the screen of the personal computer used within the airplane, the control means 3 carries out the control for the blue light by making reference to the control pattern P₂, thereby making it possible to adapt the biological rhythm of the user to the arrival place time while the user is moved in a plane.

As described above, in the image display device A according to the present invention, the various control patterns can be adopted, for example, for the purpose of maintaining the biological rhythm of the user as with the control pattern P₁ shown in "TABLE 1," or for the purpose of correcting (adapting) the biological rhythm of the user as with the control pattern P₂ described above.

It is noted that in FIG. 6, reference numeral 56 designates a portion on which the intensity of the environment light received by the light receiving portion 7 described above is displayed, and reference numeral 57 designates a portion on which whether or not the adjustment of the biological clock is carried out in the phase of the use is displayed.

FIG. 7 shows a notebook-size personal computer in which the image display device A is adopted as a display. In the figure, reference numeral 7 designates a light receiving portion. In addition, reference numeral 9 designates switching means (switch-over switch) for selecting whether or not the adjustment of the biological clock in the biological clock adjusting area 22 described above is carried out.

The light receiving portion 7 can receive the environment light. The light receiving portion 7 is desirably provided in such a position as not to receive the light emitted from a display portion 2. Thus, for example, the light receiving portion 7 is provided either in an outer frame (frame) of the display portion 2 shown in the figure, or in a back surface of the image display device A.

### Industrial Applicability

The image display device according to the present invention is adopted in a wide range of the display devices such as the displays of the personal computer, the television set, and the mobile apparatus, and the display mounted to each of the seats within the air plane, and can be used for adjusting the biological clock.

## Claims

1. An image display device for displaying an image by radiating a light from a light source to a display portion, comprising:
a radiation emitter for emitting a light having a wavelength band of 445 to 480 nm in the light source; and
control means for controlling an intensity of the light having the wavelength band;
wherein the display portion includes an area on which a predetermined image is displayed, and an area on which an image for which the intensity of the light having the wavelength band is controlled by the control means separately, independently of each other.

2. The image display device according to claim 1, **characterized by** further comprising:
discriminating means for discriminating a work area and a non-work area for a user in the display portion from each other;
wherein the control means causes an image for which the intensity of the light having the wavelength band is controlled to be displayed in the non-work area in accordance with an output from the discriminating means.

3. The image display device according to claim 1, **characterized by** further comprising:
input means for setting an arbitrary control pattern in accordance with which the intensity of the light having the wavelength band is controlled; and
storage means for holding the control pattern thus inputted;
wherein the control means controls the intensity of the light having the wavelength band in accordance with the control pattern set by the input means and outputted from the storage means.

4. The image display device according to claim 1, **characterized by** further comprising:
a light receiving portion for receiving a light from an environment;
wherein the control means controls the intensity of the light having the wavelength band in accordance with an output from the light receiving portion.
